# EUROPEAN PATENT SPECIFICATION

(11) **EP 2 333 166 B1**
(45) Date of publication and mention of the grant of the patent: **25.07.2012**
(21) Application number: 10193442.0
(22) Date of filing: 02.12.2010
(51) Int. Cl.: E02F 9/16, B62D 33/06, F16F 1/38

(54) **Construction equipment having unified vibration absorber and rollover protection structure**
Baugerät mit vereinheitlichtem Schwingungsdämpfer und Überrollschutzstruktur
Équipement de construction doté d'un amortisseur unifié de vibrations et structure de protection de disposition de roulement

(30) Priority: 03.12.2009 KR 20090118967
(43) Date of publication of application: 15.06.2011
(73) Proprietor: Volvo Construction Equipment Holding Sweden AB, 631 85 Eskilstuna (SE)
(72) Inventor: Yoon, Chun Jin, 641-180 Changwon-si (KR)
(74) Representative: Zimmermann, Tankred Klaus

(56) References cited:
- FR-A1- 2 909 396
- JP-A- 5 098 666
- JP-A- 11 217 849
- JP-A- 2001 171 565
- JP-A- 2007 176 401
- JP-A- 2007 177 560
- JP-U- H0 245 881
- US-A1- 2007 278 811

## Description

### BACKGROUND OF THE INVENTION

### Field of the invention

The present invention relates to construction equipment which can prevent excessive displacement of a cab by means of an ROPS (Rollover Protective Structure) when impact or the like is transferred to the cab.

More particularly, the present invention relates to construction equipment having unified vibration absorber and ROPS, which can protect an operator by restricting the displacement of a cab through the ROPS when an excessive load is applied to the cab due to a rollover accident or the like of the equipment during traveling or working of the equipment.

### Description of the Prior Art

The rules for a cab protection structure have been strengthened to secure an operator's safety when an accident occurs in ISO (International Organization for Standardization) or SAE (Society of Automotive Engineers). That is, an FOPS (Falling Object Protective Structure) which prevents a dangerous object from making an invasion into an operator's work range in a cab during working, an ROPS (Rollover Protective Structure) which protects an operator from a cab structure that is displaced when the equipment is overturned during working, and the like, are installed in the cab.

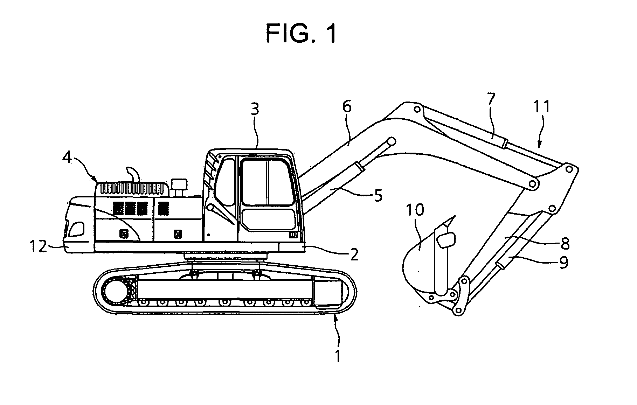

Construction equipment to which the present invention is applied, as illustrated in FIG. 1, includes a lower driving structure 1; an upper swing structure 2 mounted on the lower driving structure 1 to be swiveled; a cab 3 and an engine room 4 mounted on the upper swing structure 2; a working device 11 including a boom 6 rotatably fixed to the upper swing structure 2 to be driven by a boom cylinder 5, an arm 8 connected to the boom 6 to be driven by an arm cylinder 7, and a bucket 10 connected to the arm 8 to be driven by a bucket cylinder 9; and a counter weight 12 mounted on the rear of the upper swing structure 2.

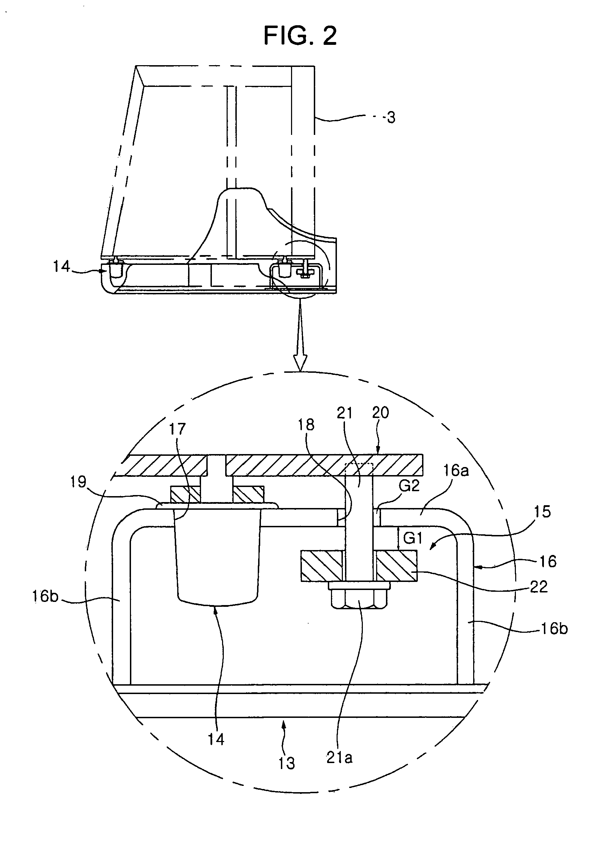

A vibration absorber and load supporter mounted on a cab of the construction equipment in the related art, as illustrated in FIG. 2, may include a vibration absorber 14 that elastically supports a cab 3 against a body frame 13 so as to offset vibration or the like of the equipment transferred to the cab 3 in upward and downward directions, and a load supporter 15 that controls displacement of the cab 3 when such displacement occurs on the cab 3.

As an enlarged illustration of FIG. 2, a bracket 16 that is composed of an upper plate 16a and a side wall 16b is fixed to an upper surface of the body frame 13, and through-holes 17 and 18 for mounting the vibration absorber 14 and the load supporter 15 are formed on the upper plate 16a.

The above-described vibration absorber 14 is inserted into the through-hole 17 of the bracket 16, and an external flange 19 thereof is fixed to the upper plate 16a by a bolt (not illustrated).

The load supporter 15 as described above includes a shaft member 21 fixed to a bottom plate 20 through the through-hole 18, and a stopper 22 put on a head portion 21a of the shaft member 21. If no impact or the like occurs on the body frame, a gap G1 is maintained between the upper surface of the stopper 22 and the upper plate 16a, and a gap G2 is maintained between an outer surface of the shaft member 21 and an inner surface of the through-hole 21.

If the cab 3 is displaced in a direction that becomes far from the body frame 13, such displacement is permitted until the upper surface of the stopper 22 of the load supporter 15 becomes in contact with the bottom surface of the upper plate 16a. By contrast, if the cab 3 is displaced in a direction that becomes near to the body frame 13, such displacement is permitted until the bottom surface of the bottom plate 20 becomes in contact with the upper surface of the upper plate 16a.

On the other hand, if the cab 3 is displaced in a horizontal direction against the body frame 13, such displacement is permitted until the outer surface of the shaft member 21 of the load supporter 15 becomes in contact with the inner surface of the through-hole 18.

If an elastic body (a rubber material) of the vibration absorber 14 is exposed to the outside and becomes in direct contact with grease, ozone, a chemical material, or a sharp object, the durability of the vibration absorber 14 may be shortened. In this case, the function of the load supporter 15 may be lost.

Also, since the vibration absorber 14 and the load supporter 15 are separately mounted, the number of parts for fixing them is increased to cause the increase of the manufacturing cost.

Also, the vibration absorber 14 and the load supporter 15, which are separately mounted, take up much space.

Also, the workability for assembling the vibration absorber 14 and the load supporter 15 in a narrow cab is degraded.

JP 11-217,849 A describes a vibration proof mount for a driver's cab of a vehicle. The vibration proof mount is composed of cylindrical laminated rubbers, in which rigidity to vibrations in the vertical direction are increased and rigidity to vibrations in the horizontal direction are reduced.

JP 05-098,666 A describes an approach to restrict the lateral vibration of a driver's cab of a vehicle. A pair of stoppers are provided on the back face section of a driver's cab main body, and balls are rollably provided in the stoppers. A guide is fitted to a swinging arm via vibration isolators, and the guide section of the guide is provided vertically movably via the balls between the stoppers.

JP 2001-171,565 A describes a vehicle having a cabin. An engaged part is provided on the body side, and an engaging part engaged with the engaged part to control lateral inclination of the cabin is provided on the cabin side.

JP 2007-177,560 A describes a fixing implement for a vibration proofing mount for a driver's cab of a vehicle. The vibration proofing mount includes a mount body whose upper end is fixed to a swing frame and lower end is closed to give the mount body a container-like shape in which a damping liquid is injected, and an elastic material whose upper part is fixed to a platform and which is extended toward the swing frame and is wound elastically around a shaft and its periphery, the shaft being inserted in the mount body, to close the upper end of the mount to seal up the damping liquid.

### SUMMARY OF THE INVENTION

It is an object of the present invention to provide a construction equipment avoiding the above-mentioned problems occurring in the prior art while advantages achieved by the prior art are maintained intact.

This object is achieved by a construction equipment according to claim 1.

An embodiment of the present invention relates to construction equipment having unified vibration absorber and ROPS (Rollover Protective Structure), which can prevent an elastic body of a rubber material of the vibration absorber that is mounted on a bottom surface of a cab from being exposed to the outside and damaged due to a chemical material, a sharp object, and the like.

An embodiment of the present invention relates to construction equipment having unified vibration absorber and ROPS (Rollover Protective Structure), which can reduce the number of parts and the manufacturing cost and usefully utilize a space occupied by a load supporter by integrally mounting a vibration absorber and the load supporter on the same axis.

An embodiment of the present invention relates to construction equipment having unified vibration absorber and ROPS (Rollover Protective Structure), which can improve the workability for assembling a vibration absorber and a load supporter in a narrow cab.

An embodiment of the present invention relates to construction equipment having unified vibration absorber and ROPS (Rollover Protective Structure), which can prevent a fixing bolt of a vibration absorber from being released and prevent the damage of a thread of a male screw when the male screw of the vibration absorber is fixed to a bottom plate.

In one aspect of the present invention, there is provided construction equipment having unified vibration absorber and ROPS (Rollover Protective Structure), which includes a lower driving structure; an upper swing structure including a body frame mounted on the lower driving structure to be swiveled and a bottom plate mounted on the body frame; a cap and an engine room mounted on the upper swing structure; a working device including a boom rotatably fixed to the upper swing structure to be driven by a boom cylinder, an arm connected to the boom to be driven by an arm cylinder, and a bucket connected to the arm to be driven by a bucket cylinder; a counter weight mounted on the rear of the upper swing structure; a vibration absorber mounted between the body frame and the bottom plate to elastically support the cab against the body frame; a load support cover put on the vibration absorber and fixed to a flange of the vibration absorber by a fixing device so that if overload is applied to the cab, the cab can be moved in a direction in which the load is transferred to the cab; and a fastening member closely fixing the cab, the bottom plate, the load support cover, and the vibration absorber in a body.

In a preferred embodiment of the present invention, the fixing device includes a fixing member fixing a flange of the load support cover to the flange of the vibration absorber; and a load support stopper engaged with an outer side of the fixing member, having a lower end portion passing through a through-hole formed on a flange of the load support cover, being in close contact with an upper surface of the flange of the vibration absorber, and limiting a displacement that occurs on the cab due to overload being applied to the cab.

In a preferred embodiment of the present invention, an outer diameter of the load support stopper is formed to be smaller than an inner diameter of the through-hole formed on the flange of the load support stopper so that the load support cover is movable against the fixing device when a load is applied to the cab.

With the above-described construction, the construction equipment having unified vibration absorber and ROPS (Rollover Protective Structure) according to an embodiment of the present invention has the following advantages.

An elastic body of a vibration absorber that is mounted on the bottom surface of a cab in an excavator is prevented from being exposed to the outside and damaged due to a chemical material, a sharp object, and the like, and thus the durability of the vibration absorber can be extended.

Also, since a load supporter and a vibration absorber are integrally mounted on the same axis, the number of parts and the manufacturing cost can be reduced, and thus the manufacturing cost and the working expenses can be saved.

Also, a vibration absorber and a load supporter can be easily assembled in a narrow cab.

Also, a fixing bolt of a vibration absorber is prevented from being released to secure the reliability, and the damage of a thread of a male screw is prevented when the male screw of the vibration absorber is fixed to a bottom plate.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view of construction equipment to which the present invention is applied;
FIG. 2 is a schematic view of a vibration absorber and ROPS mounted on construction equipment in the related art;
FIG. 3 is an exploded perspective view illustrating main parts of construction equipment having unified vibration absorber and ROPS according to an embodiment of the present invention;
FIG. 4 is a sectional view of the vibration absorber and ROPS illustrated in FIG. 3; and
FIGS. 5A to 5C are perspective views of a load supporter integrally mounted with the vibration absorber illustrated in FIG. 3.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

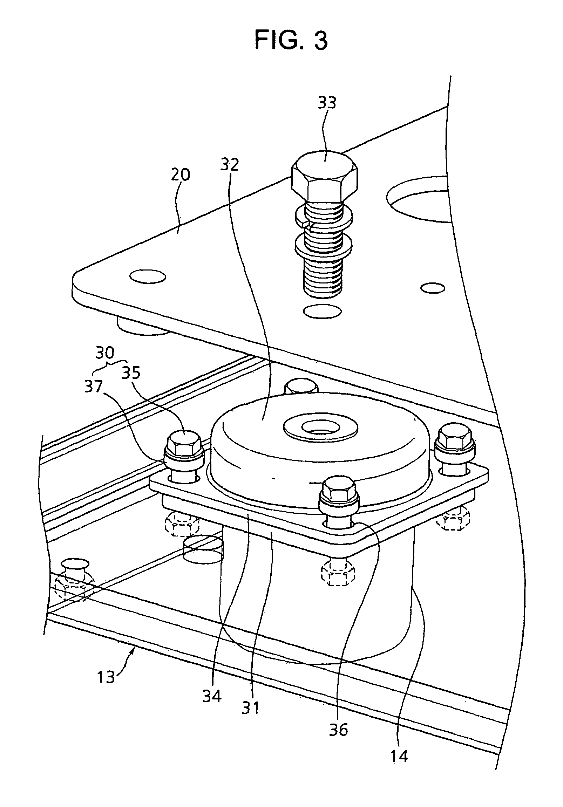

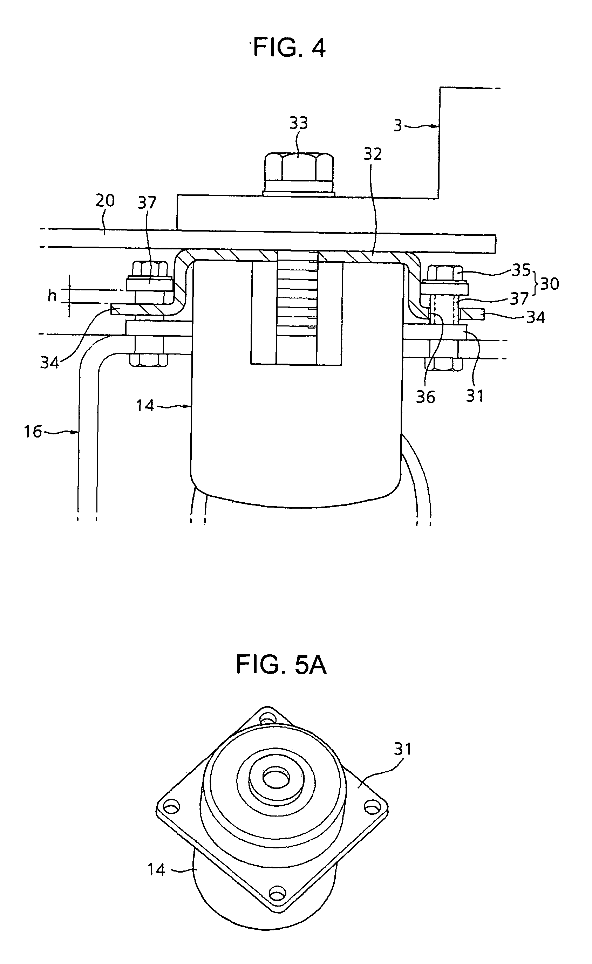

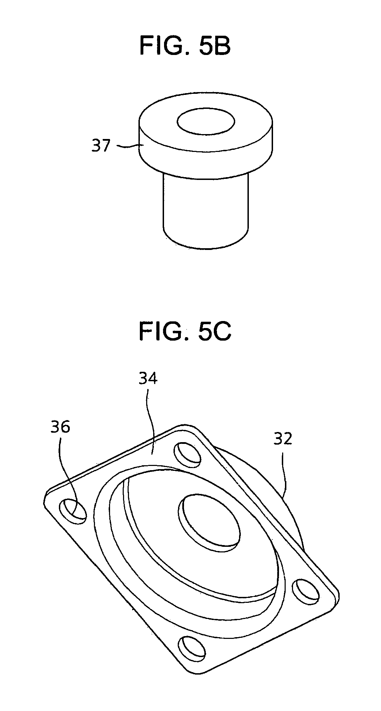

As illustrated in FIGS. 3 and FIGS. 5A to 5C, construction equipment having unified vibration absorber and ROPS (Rollover Protective Structure) according to an embodiment of the present invention includes a lower driving structure 1; an upper swing structure 2 including a body frame 13 mounted on the lower driving structure 1 to be swiveled and a bottom plate 20 mounted on the body frame 13; a cab 3 and an engine room 4 mounted on the upper swing structure 2; a working device 11 including a boom 6 rotatably fixed to the upper swing structure 2 to be driven by a boom cylinder 5, an arm 8 connected to the boom 6 to be driven by an arm cylinder 7, and a bucket 10 connected to the arm 8 to be driven by a bucket cylinder 9; a counter weight 12 mounted on the rear of the upper swing structure 2; a vibration absorber 14 mounted between the body frame 13 and the bottom plate 20 (i.e. mounted on left and right sides in the rear of the cab or mounted in the front and rear portions of the cab and on left and right sides of the cab) to elastically support the cab 3 against the body frame 13 so that impact that is transferred from the construction equipment to the cab 3 in upward and downward directions is offset; a load support cover 32 put on the vibration absorber 14 and fixed to a flange 31 of the vibration absorber 14 by a fixing device 30 so that if overload is applied to the cab 3, the cab 3 can be moved in a direction in which the load is transferred to the cab 3; and a fastening member 33 for fixing the ROPS (hereinafter referred to as a "fastening member") closely fixing the cab 3, the bottom plate 20, the load support cover 32, and the vibration absorber 14 in a body.

In a preferred embodiment of the present invention, the fixing device 30 includes a fixing member 35 (e.g. a head cap screw) fixing a flange 34 of the load support cover 32 to the flange 31 of the vibration absorber 14; and a load support stopper 37 engaged with an outer side of the fixing member, having a lower end portion passing through a through-hole 36 formed on a flange 34 of the load support cover 32, being in close contact with an upper surface of the flange 31 of the vibration absorber 14, and limiting a displacement that occurs on the cab 3 due to overload being applied to the cab 3.

In a preferred embodiment of the present invention, an outer diameter of the load support stopper 37 is formed to be smaller than an inner diameter of the through-hole 36 formed on the flange 34 of the load support stopper 37 so that the load support cover 32 is movable against the fixing device 30 when a load is applied to the cab 3.

In this case, since the construction, except for the load support cover 32 put on the vibration absorber 14 and integrally fixed to the vibration absorber 14, the fixing device 30 including the fixing member 35 and the load support stopper 37 and limiting the displacement of the cab 3 (i.e. a gap h between the upper surface of the flange 34 of the load support cover 32 and the bottom surface of a boss of the load support stopper 37) when overload is transferred to the cab 3, and the fastening member 33 fixing the vibration absorber 14, the bottom plate 20, the load support cover 32, and the cab 3 in a body, is substantially the same as the construction of the construction equipment as illustrated in FIGS. 1 and 2, the detailed explanation of the construction and operation thereof will be omitted. The same reference numerals are used for the same elements across the figures.

Hereinafter, the use example of the construction equipment having the unified vibration absorber and ROPS according to an embodiment of the present invention will be described with reference to the accompanying drawings.

As illustrated in FIGS. 3, 4, and 5A to 5C, the flange 31 of the vibration absorber 14 is fixed to a bracket 16 mounted on the body frame 13 through bolts. The load support cover 32 is put on the vibration absorber 14, and the flange 34 of the load support cover 32 is fixed to the flange 31 of the vibration absorber 14 by the fixing member 35. At this time, the load support stopper 37 is pre-engaged with and fixed to the outer surface of the fixing member 35.

As described above, the load supporter composed of the load support cover 32 and the fixing device 30 is integrally mounted on the vibration absorber 14.

The vibration absorber 14 and the load support cover 32, which are integrally fixed on the same axis, are closely fixed to the cab 3 and the bottom plate 20 in a body by the fastening member 33.

As described above, according to the construction equipment having the unified vibration absorber and ROPS according to an embodiment of the present invention, the load support cover 32, which is put on and movably fixed to the vibration absorber 14, integrally moves within the elastic displacement of the vibration absorber 14 during working or traveling of the construction equipment in a work condition where overload is not transferred to the cab 3.

On the other hand, if an excessive load is applied to the cab 3 due to a rollover accident or the like of the equipment during traveling or working of the equipment and the cab 3 is displaced in a direction that becomes far from the body frame 13, the upper surface of the flange 34 of the load support cover 32 moves upward along the fixing device 30 as shown in FIG. 4. The displacement of the cab 3 is limited to the gap h between the upper surface of the flange 34 of the load support cover 32 and the bottom surface of the boss of the load support stopper 37.

On the other hand, if the cab 3 is displaced in the horizontal direction against the body frame 13, such displacement is permitted until the outer surface of the load support stopper 37 becomes in contact with the inner surface of the through-hole 36 of the flange 34.

## Claims

1. Construction equipment having unified vibration absorber and ROPS (Rollover Protective Structure), comprising:
a lower driving structure (1);
an upper swing structure (2) including a body frame (13) mounted on the lower driving structure (1) to be swiveled and a bottom plate (20) mounted on the body frame (13);
a cab (3) and an engine room (4) mounted on the upper swing structure (2);
a working device (11) including a boom (6) rotatably fixed to the upper swing structure (2) to be driven by a boom cylinder (5), an arm (8) connected to the boom (6) to be driven by an arm cylinder (7), and a bucket (10) connected to the arm (8) to be driven by a bucket cylinder (9);
a counter weight (12) mounted on the rear of the upper swing structure (2);
a vibration absorber (14) mounted between the body frame (13) and the bottom plate (20) to elastically support the cab (3) against the body frame (13);
a load support cover (32) put on the vibration absorber (14) and fixed to a flange (31) of the vibration absorber (14) by a fixing device (30) so that if overload is applied to the cab (3), the cab (3) can be moved in a direction in which the load is transferred to the cab (3); and
a fastening member (33) closely fixing the cab (3), the bottom plate (20), the load support cover (32), and the vibration absorber (14) in a body,
wherein the fixing device (30) comprises:
a fixing member (35) fixing a flange (34) of the load support cover (32) to the flange (31) of the vibration absorber (14);
and wherein a load support stopper (37) is engaged with an outer side of the fixing member (35), having a lower end portion passing through a through-hole (36) formed on the flange (34) of the load support cover (32), being in close contact with an upper surface of the flange (31) of the vibration absorber (14), and limiting a displacement that occurs on the cab (3) due to overload being applied to the cab (3),
**characterized in that**
an outer diameter of the load support stopper (37) is formed to be smaller than an inner diameter of the through-hole (36) formed on the flange (34) of the load support cover (32) so that the load support cover (32) is movable against the fixing device (30) when a load is applied to the cab (3).

## Patentansprüche

1. Bauausrüstung mit einem einheitlichen Schwingungsdämpfer und einer ROPS (ROPS = rollover protective structure = Überrollschutzstruktur), die folgende Merkmale aufweist:
eine untere Antriebsstruktur (1);
eine obere Schwingstruktur (2), die einen Körperrahmen (13) umfasst, der auf der unteren Antriebsstruktur (1) befestigt ist, um geschwenkt zu werden, und eine Unterplatte (20), die an dem Körperrahmen (13) befestigt ist;
eine Kabine (3) und einen Motorraum (4), die auf der oberen Schwingstruktur (2) befestigt sind;
eine Arbeitsvorrichtung (11), die einen Ausleger (6), der drehbar an der oberen Schwingstruktur (2) befestigt ist, um durch einen Auslegerzylinder (5) angetrieben zu werden, einen Arm (8), der mit dem Ausleger (6) verbunden ist, um durch einen Armzylinder (7) angetrieben zu werden, und eine Schaufel (10) umfasst, die mit dem Arm (8) verbunden ist, um durch einen Schaufelzylinder (9) angetrieben zu werden;
ein Gegengewicht (12), das an der Rückseite der oberen Schwingstruktur (2) befestigt ist;
einen Schwingungsdämpfer (14), der zwischen dem Körperrahmen (13) und der Unterplatte (20) befestigt ist, um die Kabine (3) gegenüber dem Körperrahmen (13) elastisch zu tragen;
eine Lasttrageabdeckung (32), die auf den Schwingungsdämpfer (14) gesetzt ist und durch eine Befestigungsvorrichtung (30) an einem Flansch (31) des Schwingungsdämpfers (14) befestigt ist, sodass, falls Überlast an die Kabine (3) angelegt wird, die Kabine (3) in einer Richtung bewegt werden kann, in der die Last auf die Kabine (3) übertragen wird; und
ein Halterungsbauglied (33), das die Kabine (3), die Unterplatte (20), die Lasttrageabdeckung (32) und den Schwingungsdämpfer (14) fest in einem Körper befestigt, wobei die Befestigungsvorrichtung (30) folgende Merkmale aufweist:
ein Befestigungsbauglied (35), das einen Flansch (34) der Lasttrageabdeckung (32) an dem Flansch (31) des Schwingungsdämpfers (14) befestigt; und
wobei eine Lasttrageanschlagvorrichtung (37) mit einer Außenseite des Befestigungsbauglieds (35) Eingriff nimmt, von dem ein unterer Endabschnitt durch ein Durchgangsloch (36) verläuft, das auf dem Flansch (34) der Lasttrageabdeckung (32) gebildet ist, das in engem Kontakt mit einer oberen Oberfläche des Flansches (31) des Schwingungsdämpfers (14) ist und eine Verschiebung begrenzt, die an der Kabine (3) auftritt aufgrund von Überlast, die an die Kabine (3) angelegt wird;
**dadurch gekennzeichnet, dass** ein Außendurchmesser der Lasttrageanschlagvorrichtung (37) gebildet ist, um kleiner zu sein als ein Innendurchmesser des Durchgangslochs (36), das auf dem Flansch (34) der Lasttrageabdeckung (32) gebildet ist, sodass die Lasttrageabdeckung (32) gegenüber der Befestigungsvorrichtung (30) bewegbar ist, wenn eine Last an die Kabine (3) angelegt wird.

## Revendications

1. Equipement de construction doté d'un amortisseur unifié de vibrations et de structure de protection de dispositif de roulement, comprenant:
une structure d'entraînement inferieure (1);
une structure de basculement supérieure (2) comportant un châssis de corps (13) monté sur la structure d'entraînement inferieure (1) à faire basculer et une plaque inferieure (20) montée sur le châssis de corps (3);
une cabine (3) et une chambre de moteur (4) montées sur la structure de basculement supérieure (2) ;
un dispositif de travail (11) comportant une flèche (6) fixée de manière rotative à la structure de basculement supérieure (2) de manière à être entraînée par un cylindre de flèche (5), un bras (8) connecté à la flèche (6) de manière à être entraîné par un cylindre de bras (7), et un seau (10) connecté au bras (8) de manière à être entraîné par un cylindre de seau (9);
un contrepoids (12) monté sur l'arrière de la structure de basculement supérieure (2);
un amortisseur de vibrations (14) monté entre le châssis de corps (13) et la plaque de fond (20) destiné à supporter élastiquement la cabine (3) contre le châssis de corps (13);
un couvercle de support de charge (32) placé sur l'amortisseur de vibrations (14) et fixé à une bride (31) de l'amortisseur de vibrations (14) par un dispositif de fixation (30) de sorte que si une surcharge est appliquée à la cabine (3), la cabine (3) peut être déplacée dans une direction dans laquelle la charge est transférée à la cabine (3); et
un élément de fixation (33) fixant étroitement la cabine (3), la plaque de fond (20), le couvercle de support de charge (32), et l'amortisseur de vibrations (14), pour former un corps,
dans lequel le dispositif de fixation (30) comprend:
un élément de fixation (35) fixant une bride du couvercle de support de charge (32) à la bride (31) de l'amortisseur des vibrations (14); et
dans lequel un arrêteur de support de charge (37) est en prise avec un coté extérieur de l'élément de fixation (35), présentant une partie d'extrémité inferieure passant à travers un trou traversant (36) formé sur la bride (34) du couvercle de support de charge (32), en contact étroit avec une surface supérieure de la bride (31) de l'amortisseur de vibrations (14) et limitant un déplacement qui se produit sur la cabine (3) du fait d'une surcharge appliquée à la cabine (3),
**caractérisé par le fait que**
un diamètre extérieur de l'arrêteur du support de charge (37) est formé de manière à être inferieur à un diamètre intérieur du trou traversant (36) formé sur la bride (34) du couvercle de support de charge (32) de sorte que le couvercle de support de charge (32) puisse être déplacé contre le dispositif de fixation (30) lorsqu'une charge est appliquée à la cabine (3).
